# EUROPEAN PATENT APPLICATION

(11) **EP 4 788 048 A1**
(43) Date of publication of application: **05.08.2026**
(21) Application number: 23953777.2
(22) Date of filing: 28.09.2023
(51) Int. Cl.: H04W 76/18

(54) **INFORMATION RECEIVING METHOD AND APPARATUS, INFORMATION TRANSMITTING METHOD AND APPARATUS, AND COMMUNICATION SYSTEM**

(71) Applicant: 1FINITY INC., Kawasaki-shi, Kanagawa 211-8588 (JP)
(72) Inventor: LI, Guorong, Beijing 100022 (CN); YI, Su, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2023/122927
(87) International publication number: WO 2025/065633

(57) **Abstract**

The present disclosure provides an information receiving apparatus and method, an information transmitting apparatus and method, and a communication system. The information transmitting and receiving method comprises that: a first remote UE communicates with at least one of second remote UEs via a relay UE, the first remote UE receives a notification message transmitted by the relay UE, the notification message being used to indicate a radio link failure between the relay UE and at least one of the second remote UEs.

## Description

### TECHNICAL FIELD

Embodiments of the present disclosure relate to the technical field of radio communication.

### BACKGROUND

New technologies are introduced in a standardization process of a 5th Generation Mobile Communication Technology (5G) of a 3rd Generation Partnership Project (3GPP), allowing user equipments (UEs) to directly discover and/or communicate with each other by using a sidelink (SL) communication technology, in which a sidelink interface may also be called a PC5 interface. For example, vehicle-to-everything (V2X) communication, public safety (PS) communication, direct file transfer between UEs, etc., may rely on communication on a sidelink interface.

UE-to-UE relay (U2U relay) from a user equipment (UE) to a user equipment (UE) is studied in Release 18, in which the UE-to-UE relay refers to that "a source user equipment (Source UE)" and "a destination user equipment (Destination UE)" (which may also be called "a source remote user equipment (Source remote UE)" and "a destination remote user equipment (Destination remote UE)" respectively, or "a Source UE" and "a Destination UE" are collectively called "a remote user equipment (remote UE)") communicate via "a relay user equipment (Relay UE)", wherein a Source UE and a Relay UE perform communication using a sidelink, a Relay UE and a Destination UE perform communication using a sidelink, thereby effectively expanding a coverage range of sidelink transmission between a Source UE and a Destination UE and saving a transmission power of a remote UE.

It is worth noting that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in the Background of the present disclosure.

### SUMMARY

In Release 18 study on U2U relay, it is agreed to use a user plane protocol stack and a control plane protocol stack which introduce an adaptation (ADAPT) layer, the adaptation layer may also be called a Sidelink Relay Adaptation Protocol (SRAP) layer.

In 3GPP, one remote UE may communicate with at least one peer remote UE via a same relay UE. When a relay UE detects that a PC5 Radio Link Failure (RLF) with a peer remote UE occurs, the relay UE transmits a *NotificationMessageSidelink* message to the remote UE, the message including a sidelink indication type (*sl-IndicationType*) information element, the information element being set as *relayUE-PC5-RLF*.

When the remote UE receives the *NotificationMessageSidelink* message, and when the *sl-IndicationType* information element is set as *relayUE-PC5-RLF*, the remote UE indicates an upper layer (V2X layer or NAS layer) to trigger reselection of a U2U relay UE. If a remote UE is a Source remote UE, a peer remote UE correspondingly is a Destination remote UE, otherwise, if a remote UE is a Destination remote UE, a peer remote UE correspondingly is a Source remote UE.

However, the inventors find that for example, when a relay UE detects that a PC5 radio link failure (PC5 RLF or called sidelink RLF or SL RLF, or may also be called "a radio link failure" in the following text) occurs between the relay UE and one of peer remote UEs, the relay UE transmits a *NotificationMessageSidelink* message to the remote UE. At this point, a normal communication may still be performed on sidelinks between a relay UE and other peer remote UEs, that is to say, communication between the remote UE and other peer remote UEs relayed via the relay UE is not affected. However, based on an existing *NotificationMessage Sidelink* message, for example an *sl-IndicationType* information element is set as *relayUE-PC5-RLF*, the remote UE is unaware of which peer remote UE the remote UE is unable to communicate with normally, and is unaware of how to operate after receiving the *NotificationMessageSidelink* message.

Currently, there are no relevant provisions on what information is contained in a *NotificationMessageSidelink* message transmitted by a relay UE to a remote UE and how to process after a remote UE receives the *NotificationMessageSidelink* message.

To solve at least one of the above problems or other similar problems, embodiments of the present disclosure provide an information receiving method and apparatus, an information transmitting method and apparatus, and a communication system.

According to one aspect of embodiments of the present disclosure, an information receiving method is provided, applicable to a first remote UE, the method including:
communicating with at least one of second remote UEs via a relay UE, and
receiving a notification message transmitted by the relay UE, the notification message being used to indicate a radio link failure between the relay UE and at least one of the second remote UEs.

According to another aspect of embodiments of the present disclosure, an information receiving apparatus is provided, configured in a first remote UE, the apparatus including:
a first communication unit configured to communicate with at least one of second remote UEs via a relay UE; and
a first receiving unit configured to receive a notification message transmitted by the relay UE, the notification message being used to indicate a radio link failure between the relay UE and at least one of the second remote UEs.

Embodiments of the present disclosure further provide an information transmitting method, applicable to a relay UE, the method including:
communicating with a first remote UE and at least one of second remote UEs, and
transmitting a notification message to the first remote UE, the notification message being used to indicate a radio link failure between a relay UE and at least one of the second remote UEs.

Embodiments of the present disclosure further provide an information transmitting apparatus, applicable to a relay UE, the apparatus including:
a second communication unit configured to communicate with a first remote UE and at least one of second remote UEs; and
a first transmitting unit configured to transmit a notification message to the first remote UE, the notification message being used to indicate a radio link failure between the relay UE and at least one of the second remote UEs.

According to a further aspect of embodiments of the present disclosure, a communication system is provided, the system including:
a first remote UE configured to execute an information receiving method in a first remote UE side;
a relay UE configured to execute an information transmitting method in a relay UE side; and
at least one second remote UE configured to communicate with the first remote UE via the relay UE.

An advantageous effect of embodiments of the present disclosure is that: in UE-to-UE relay, one remote UE communicates with at least one of peer remote UEs via a same relay UE, and a relay UE detects a radio link failure (RLF) to a peer remote UE and transmits a notification message to a remote UE, indicating a radio link failure to at least one peer remote UE, thereby the remote UE is able to perform relevant operations for some (including one or more) or entire (i.e., all) peer remote UEs in case of a radio link failure according to the notification message.

Referring to later descriptions and drawings, specific implementations of the present disclosure are disclosed in detail, indicating a mode in which a principle of the present disclosure may be adopted. It should be understood that implementations of the present disclosure are not limited in terms of a scope. Within the scope of the terms of the attached claims, implementations of the present disclosure include many changes, modifications and equivalents.

Features described and/or shown for one implementation may be used in the same way or in a similar way in one or more other implementations, may be combined with or replace features in other implementations.

It should be emphasized that the term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

An element and a feature described in one drawing or one implementation of the embodiments of the present disclosure may be combined with an element and a feature shown in one or more other drawings or implementations. In addition, in the drawings, similar labels denote corresponding components in several drawings and may be used to indicate corresponding components used in more than one implementation.

The included drawings are used to provide further understanding on the embodiments of the present disclosure, constitute a part of the Specification, are used to illustrate implementations of the present disclosure, and expound a principle of the present disclosure together with text descriptions. Obviously, the drawings in the following descriptions are only some embodiments of the present disclosure. Persons skilled in the art may further obtain other drawings according to these drawings under the premise that they do not pay inventive labor. In the drawings:
FIG. 1 is a schematic diagram of a system protocol stack architecture in embodiments of the present disclosure;
FIG. 2 is a schematic diagram of a scenario in embodiments of the present disclosure;
FIG. 3 is another schematic diagram of a scenario in embodiments of the present disclosure;
FIG. 4 is a schematic diagram of an information receiving method in embodiments of the present disclosure;
FIG. 5 is a schematic diagram of an information transmitting method in embodiments of the present disclosure;
FIG. 6 is another schematic diagram of an information transmitting method in embodiments of the present disclosure;
FIG. 7 is a schematic diagram of an information transmitting and receiving method in embodiments of the present disclosure;
FIG. 8 is a schematic diagram of an information receiving apparatus in embodiments of the present disclosure;
FIG. 9 is a schematic diagram of an information transmitting apparatus in embodiments of the present disclosure;
FIG. 10 is a schematic diagram of composition of a terminal equipment in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations for which the principle of the present disclosure may be adopted. It should be understood that the present disclosure is not limited to described implementations, on the contrary, the present disclosure includes all modifications, variations and equivalents falling within the scope of the attached claims. Various implementations of the present disclosure are described below with reference to the drawings. These implementations are only exemplary and are not limitations on the present disclosure.

In embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any one of and all combinations of one or more of listed associated terms. The terms "contain", "include" and "have", etc. refer to presence of stated features, elements, components or assemblies, but do not exclude presence or addition of one or more other features, elements, components or assemblies.

In embodiments of the present disclosure, the singular forms "a/an" and "the", etc. include plural forms, and should be understood broadly as "a kind of" or "a type of", but are not defined as the meaning of "one", in addition, the term "the" should be understood to include both singular forms and plural forms, unless otherwise explicitly indicated in the context. In addition, the term "according to" should be understood as "at least partially according to......", and the term "based on" should be understood as "at least partially based on......", unless otherwise explicitly indicated in the context.

In embodiments of the present disclosure, the term "communication network" or "radio communication network" may refer to a network meeting any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol at any stage, for example the following communication protocols may be included but be not limited thereto: 1G (generation), 2G, 2.5G, 2.75G, 3G, 4G, 4.5G, 5G, New Radio (NR) and future 6G, etc., and/or other communication protocols that are currently known or will be developed in the future.

In embodiments of the present disclosure, the term "network device" e.g. refers to a device accessing a terminal equipment to a communication network in a communication system and providing services to the terminal equipment. A network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

A BS may include but be not limited to: a node B (NodeB or NB), an evolution node B (eNodeB or eNB) and a 5G base station (gNB), etc., moreover, may further include a Remote Radio Head (RRH), a Remote Radio Unit (RRU), a relay or low power node (such as femto, pico, etc.). And the term "BS" may include some or all functions thereof, each BS may provide communication coverage to a specific geographic region. The term "cell" may refer to a BS and/or a coverage area thereof, which depends on a context in which this term is used.

In embodiments of the present disclosure, the term "User Equipment (UE)" or "Terminal Equipment (TE)" e.g. refers to a device accessing a communication network and receiving network services through a network device. A UE may be fixed or mobile, and may also be called a Mobile Station (MS), a terminal, a Subscriber Station (SS), an Access Terminal (AT) and a station and so on.

A UE may include but be not limited to the following devices: a Cellular Phone, a Personal Digital Assistant (PDA), a radio modem, a radio communication device, a handheld device, a machine-type communication device, a laptop computer, a cordless phone, a smart phone, a smart watch, a digital camera, a wearable device and so on.

For another example, under a scenario such as Internet of Things (IoT), the UE may further be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal, a terminal supporting sidelink communication, and so on.

Moreover, the term "network side" or "network device side" refers to a side of a network, may be a BS, or may include one or more network devices as mentioned above. The term "user side" or "terminal side" or "a TE side" refers to a side of a user or terminal, may be a UE, or may include one or more TEs as mentioned above. Unless otherwise indicated herein, "device" may refer to a network device, or may refer to a TE.

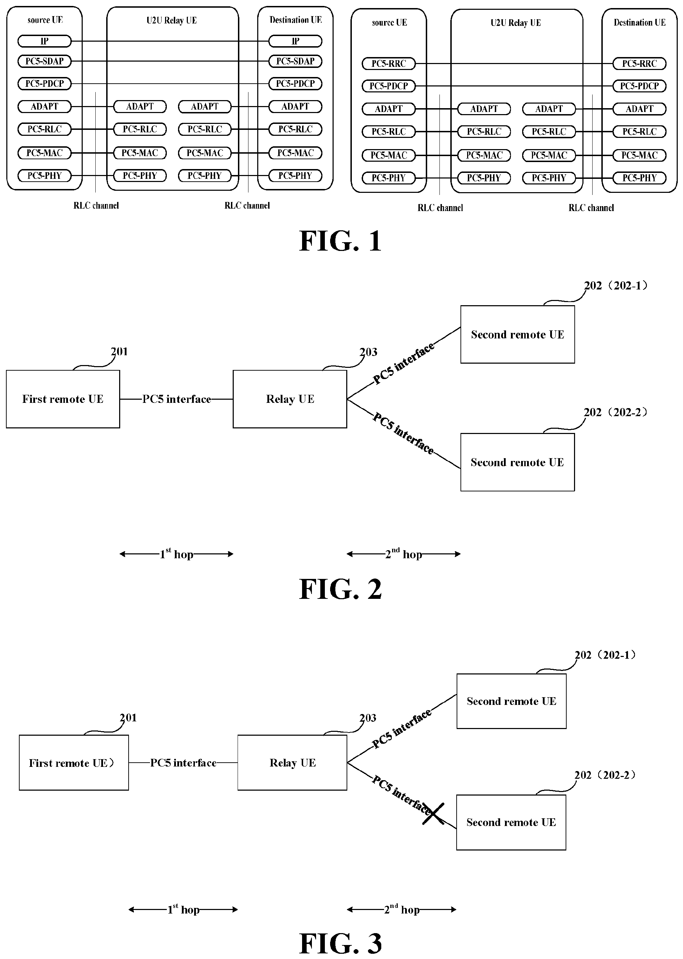

FIG. 1 is a schematic diagram of a system protocol stack architecture in embodiments of the present disclosure, including a user plane protocol stack diagram (as shown in the left figure of FIG. 1) and a control plane protocol stack diagram (as shown in the right figure of FIG. 1). As shown in FIG. 1, on a link of a PC5 interface, an ADAPT layer is supported. In a user plane protocol stack diagram, an IP layer, a Service Data Adaptation Protocol (SDAP) layer and a Packet Data Convergence Protocol (PDCP) layer are located above an ADAPT layer, a Radio Link Control (RCL) layer, a Media Access Control (MAC) layer and a physical (PHY) layer are located below the ADAPT layer. In a control plane protocol stack diagram, a Radio Resource Control (RRC) layer and a PDCP layer are located above an ADAPT layer, and an RLC layer, an MAC layer and a PHY layer are located below the ADAPT layer. Optionally, ADAPT in FIG. 1 may be replaced with SRAP, the present disclosure does not impose any restrictions in this regard. In a user plane protocol stack diagram, an IP layer, an SDAP layer and a PDCP layer are terminated between two remote UEs, while an RLC layer, an MAC layer and a PHY layer are terminated in each PC5 link. In a control plane protocol stack diagram, an RRC layer and a PDCP layer are terminated between two remote UEs, while an RLC layer, an MAC layer and a PHY layer are terminated in each PC5 link.

Scenarios of embodiments of the present disclosure are described through the following examples, however the present disclosure is not limited thereto.

FIG. 2 is a schematic diagram of a scenario in embodiments of the present disclosure. For the sake of simplicity, FIG. 2 only schematically describes a signaling interaction and data transmission mode among a UE-to-UE relay UE (U2U relay UE), i.e., a relay UE 203, a first remote UE 201 and a second remote UE 202. The number of second remote UEs 202 is at least one. FIG. 2 takes two second remote UEs 202-1 and 202-2 as an example, however the present disclosure is not limited thereto. And, the first remote UE 201 may further be expressed as a Transmission remote UE, a Source remote UE, a Receiving remote UE, a Destination remote UE or a Target remote UE, etc., and the second remote UE 202 may further be expressed, correspondingly to a first remote UE, as a Receiving remote UE, a Destination remote UE, a Target remote UE, a Transmission remote UE or a Source remote UE. As shown in FIG. 2, a PC5 interface is employed between a first remote UE 201 and a relay UE 203 and between a second remote UE 202 and a relay UE 203, to communicate using a sidelink. A first hop (1^{st} hop) is from a first remote UE 201 to a relay UE, and a second hop (2^{nd} hop) is from a relay UE to a second remote UE. UE to-UE relay is studied in Release 18 and is able to expand coverage of sidelink transmission between two remote UEs and save power. A scenario of the present disclosure includes at least one of the following scenarios:
all UEs (a first remote UE, a Relay UE, a second remote UE) are within network coverage,
all UEs (a first remote UE, a Relay UE, a second remote UE) are outside network coverage, or
partial coverage in which at least one UE (a first remote UE, a Relay UE or a second remote UE) is within network coverage, and at least one UE (a first remote UE, a Relay UE or a second remote UE) is outside network coverage.

For protocol stack structures of a relay UE 203, a first remote UE 201 and a second remote UE 202 in FIG. 2, a protocol stack in FIG. 1 may be referred to, no repeated description is provided here.

FIG. 3 is another schematic diagram of a scenario in embodiments of the present disclosure. As shown in FIG. 3, in U2U relay, one first remote UE 201 communicates with at least one (taking two as an example in FIG. 3) second remote UE 202 (also called a peer remote UE of a first remote UE) via a same relay UE 203, and a relay UE 203 detects a PC5 radio link failure with at least one second remote UE 202, for example a relay UE in FIG. 3 detects a PC5 radio link failure between the relay UE and a second remote UE 202-2. Inventors find that regardless of whether a sidelink between a relay UE and a second remote UE 202-1 is able to communicate normally, a relay UE 203 will transmit a *Notification MessageSidelink* message to a first remote UE 201. However, based on an existing *NotificationMessageSidelink* message (an *sl-IndicationType* information element is set as *relayUE-PC5-RLF*), a first remote UE 201 is unaware of which second remote UE 202 the first remote UE 201 is unable to communicate with normally, and is unaware of how to operate after receiving a *NotificationMessageSidelink* message. Therefore, what information is contained in a *NotificationMessageSidelink* message transmitted by a relay UE 203 to a first remote UE 201 and how to process after a remote UE receives the *NotificationMessage Sidelink* message are problems needing to be solved.

For at least one of the above problems, embodiments of the present disclosure provide an information receiving method and apparatus, an information transmitting method and apparatus, and a communication system.

### Embodiments of a First Aspect

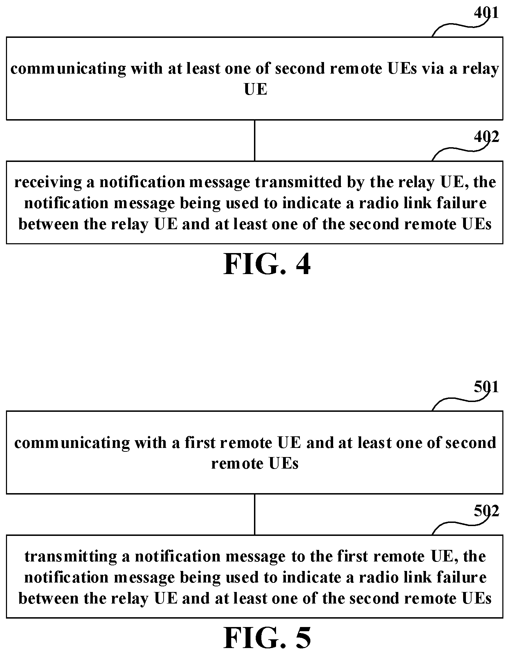

FIG. 4 is a schematic diagram of an information receiving method in the embodiments of the present disclosure. As shown in FIG. 3 and FIG. 4, the method is applicable to a first remote UE, the method including:
401, communicating with at least one of second remote UEs via a relay UE, and
402, receiving a notification message transmitted by the relay UE, the notification message being used to indicate a radio link failure between the relay UE and at least one of the second remote UEs.

According to the above embodiments, in UE-to-UE relay, a first remote UE communicates with at least one of second remote UEs via a same relay UE, a relay UE detects a radio link failure (RLF) to at least one of second remote UEs and transmits a notification message to the first remote UE, the notification message indicating a radio link failure between a relay UE and at least one peer remote UE, thereby the remote UE is able to know which (one) or which (more than one) or entire peer remote UEs is/are unable to be communicated normally according to the notification message, so as to perform relevant operations for the peer remote UE in case of a radio link failure, which solves the above problem existing in related arts.

It is worth noting that the above FIG. 4 only schematically describes embodiments of the present disclosure, however the present disclosure is not limited thereto. For example, an execution sequence of each operation may be adjusted appropriately, moreover some other operations may be added or removed. Persons skilled in the art may make appropriate modifications according to the above contents, not being limited to the records in the above FIG. 4.

In some embodiments, a first remote UE may be a source remote UE, a second remote UE may be a destination remote UE, vice versa, further elaboration is omitted here.

In some embodiments, in 401, a first remote UE communicates with at least one of second remote UEs via a relay UE, the number of the second remote UEs may be one, or may be more than one, for example the number of second remote UEs in a scenario shown in FIG. 3 is two, the present disclosure does not impose limitations thereon.

In some embodiments, in 401, a relay UE communicates with a second remote UE via a radio link, the radio link being a PC5 radio link or a PC5 unicast link or a sidelink, and a corresponding radio link failure is called a PC5 radio link failure (PC5 RLF) or a sidelink radio link failure (Sidelink RLF).

In some embodiments, in 402, a first remote UE receives a notification message transmitted by a relay UE, the notification message may indicate a radio link failure between the relay UE and some of second remote UEs (such as one or more of second remote UEs) or entire (all) second remote UEs. Thus, the remote UE is able to know which one or which or entire peer remote UEs is/are unable to be communicated normally according to the notification message.

In some embodiments, in 402, a notification message received by a first remote UE and transmitted by a relay UE includes identification information related to a radio link failure. The notification message may be transmitted via a PC5-RRC message, and may be an existing *NotificationMessageSidelink* message or a new PC5-RRC message different from an existing PC5-RRC message. Identification information related to a radio link failure in the notification message includes identification information related to at least one second remote UE with a radio link failure. For example, identification information related to a second remote UE is identification information able to be mapped to a second remote UE, or identification information able to be mapped to a PC5 connection or a sidelink between a relay UE and a second remote UE, or identification information able to be mapped to a PC5 connection or a sidelink between a first remote UE and a second remote UE. A first remote UE is able to determine a second remote UE associated with/corresponding to the identification information according to the identification information. For example, a first remote UE determines a second remote UE associated with/ corresponding to the identification information according to the identification information as well as an association relationship/correspondence relationship between identification information and a second remote UE or an application or service of a second remote UE. Information of the association relationship/correspondence relationship may be information stored by the first remote UE when leaving factory, or may be information configured by a network side, or information configured by a relay UE and existing in the first remote UE, or may be determined by a first remote UE according to a service mapping related rule. In addition, the identification information may include one or more than one. When the number of the identification information is one, the notification message indicates that the relay UE detects a radio link failure with one second remote UE, and when the number of the identification information is more than one, the notification message indicates that the relay UE detects radio link failures with more than one second remote UE. Thus, a first remote UE is able to determine that a relay UE detects at least one second remote UE with a radio link failure according to identification information related to a radio link failure in the notification message. For a method for a relay UE to detect a radio link failure with a second remote UE, related arts may be referred to, further elaboration is omitted here.

In some embodiments, the identification information includes a Layer 2 (L2) identifier of a second remote UE, or a pair of an L2 identifier of a first remote UE and an L2 identifier of a second remote UE. For example, an L2 identifier of the first remote UE may be determined by a V2X layer of a first remote UE according to an existing method, an L2 identifier of a second remote UE may be determined by a V2X layer of a second remote UE according to an existing method and be notified to a first remote UE, wherein a length of an L2 identifier is 24 bits.

In some embodiments, the identification information includes a Local identifier (local ID) of a second remote UE, and a local ID of the second remote UE is notified by a relay UE to a first remote UE. For example, a local identifier (local ID) of a second remote UE is allocated by a relay UE to a second remote UE, and in a process in which a first remote UE and a second remote UE perform data transmission, a local identifier of the second remote UE is contained in an SRAP header.

In some embodiments, the identification information includes: a pair of a local identifier of a first remote UE and a local identifier of a second remote UE, i.e., a local identifier pair of a first remote UE and a second remote UE. For example, a local identifier of a first remote UE is allocated by a relay UE to a first remote UE, a local identifier of a second remote UE is allocated by a relay UE to a second remote UE and notified by a relay UE to a first remote UE, and in a process in which a first remote UE and a second remote UE perform data transmission, the pair of a local identifier of a first remote UE and a local identifier of the second remote UE is contained in an SRAP header.

Lengths of a local identifier of the first remote UE and a local identifier of a second remote UE may be less than 24 bits, for example may be 4 bits, 8 bits or 12 bits, etc. Assuming that lengths of both a local ID of a first remote UE and a local ID of a second remote UE are 8 bits, a length of a pair of a local identifier of a first remote UE and a local identifier of a second remote UE is 16 bits. For specific contents and determining methods of local identifiers, related arts may be referred to, the present disclosure does not define in this regard.

In some embodiments, when a notification message includes identification information related to a radio link failure, as described above, a first remote UE may determine at least one second remote UE for which a radio link failure with a relay UE occurs according to the identification information. Therefore, the method further includes (not shown): a first remote UE performs relevant operations for at least one second remote UE for which a radio link failure with a relay UE occurs. For example, a first remote UE performs relevant operations for a second remote UE corresponding to/associated with the identification information. Thus, in UE-to-UE relay, when one first remote UE communicates with more than one (or at least two) second remote UE(s) via a same relay UE, if a relay UE detects a radio link failure for some (one or more than one, excluding all) second remote UEs, i.e., when at least one second remote UE still communicates with a relay UE normally on a radio link, a first remote UE performs relevant operations for the (one or more than one) second remote UE(s) for which a radio link failure occurs according to a notification message reported by a relay UE, normal communication of a second remote UE with a relay UE on a radio link is not affected. Thus, service interruption between a first remote UE and a second remote UE capable of communicating normally is able to be avoided, and user experience is enhanced.

In some embodiments, relevant operations performed by a first remote UE on at least one second remote UE, determined according to a notification message, include at least one of the following operations:
(1) indicating information of the at least one second remote UE to an upper layer, the information including at least one of the following information: an L2 identifier of a second remote UE, a PC5 unicast link identifier between a first remote UE and a second remote UE, a pair of an L2 identifier of a first remote UE and an L2 identifier of a second remote UE,
(2) indicating an upper layer to trigger reselection of a relay UE for the at least one second remote UE,
(3) determining/considering that a radio link failure is detected for the at least one second remote UE,
(4) releasing a PC5-RRC connection with the at least one second remote UE,
(5) indicating to an upper layer to release a PC5-RRC connection with the at least one second remote UE,
(6) executing a sidelink UE information procedure when the first remote UE is in an RRC connected state,
(7) releasing all Signalling Radio Bearers (SRBs) and/or Data Radio Bearers (DRBs) with the second remote UE,
(8) indicating to an upper layer that a PC5 RLF for the second remote UE is received from a relay UE, or
(9) maintaining a connection with a second remote UE for which a radio link with the relay UE does not fail, of second remote UEs communicating with the first remote UE via the relay UE.

In some embodiments, the upper layer may include a Vehicle to Everything (V2X) layer or a Non-access stratum (NAS) layer, but is not limited thereto, examples are not listed one by one here.

Each of the above operations (1) to (9) is described respectively below.

For example, for operation (1), when/after receiving a notification message transmitted by a relay UE, a first remote UE may indicate to an upper layer information of at least one second remote UE for which a radio link failure occurs. Information of the second remote UE is described as above and is not further elaborated here.

In a case where identification information related to a radio link failure included in a notification message transmitted by a relay UE is an L2 identifier of a second remote UE, if a first remote UE indicates an L2 identifier of a second remote UE to an upper layer, the first remote UE may indicate an L2 identifier of a second remote UE in the notification message to an upper layer.

In a case where identification information related to a radio link failure included in a notification message transmitted by a relay UE is a local identifier of a second remote UE, if a first remote UE indicates an L2 identifier of a second remote UE to an upper layer, the first remote UE may convert a local identifier of a second remote UE in the notification message into an L2 identifier of a second remote UE, and then indicate the L2 identifier of a second remote UE as obtained by conversion to an upper layer. A first remote UE determines an L2 identifier of a second remote UE according to a local identifier of a second remote UE and an association relationship /a correspondence relationship between a local identifier and an L2 identifier or User Information (including an L2 ID). Information of the association relationship/correspondence relationship may be information stored by the first remote UE when leaving factory, or may be information configured by a network side, or information configured by a relay UE and existing in the first remote UE, or may further be determined by a first remote UE according to a service mapping related rule.

In a case where identification information related to a radio link failure included in a notification message transmitted by a relay UE is a pair of an L2 identifier of a first remote UE and an L2 identifier of a second remote UE, if a first remote UE indicates a pair of an L2 identifier of a first remote UE and an L2 identifier of a second remote UE to an upper layer, the first remote UE may indicate a pair of an L2 identifier of a first remote UE and an L2 identifier of a second remote UE in the notification message to an upper layer.

In a case where identification information related to a radio link failure included in a notification message transmitted by a relay UE is a pair of a local identifier of a first remote UE and a local identifier of a second remote UE, if a first remote UE indicates a pair of an L2 identifier of a first remote UE and an L2 identifier of a second remote UE to an upper layer, the first remote UE may convert a pair of a local identifier of a first remote UE and a local identifier of a second remote UE in the notification message into a pair of an L2 identifier of a first remote UE and an L2 identifier of a second remote UE, and then indicate the pair of an L2 identifier of a first remote UE and an L2 identifier of a second remote UE as obtained by conversion to an upper layer. For example, a first remote UE determines an L2 identifier of a first remote UE and an L2 identifier of a second remote UE according to a local identifier of a first remote UE, a local identifier of a second remote UE and an association relationship/a correspondence relationship between a local identifier and an L2 identifier, thus a pair of an L2 identifier of a first remote UE and an L2 identifier of a second remote UE is obtained. Information of the association relationship/correspondence relationship may be information stored by the first remote UE when leaving factory, or may be information configured by a network side, or information configured by a relay UE and existing in the first remote UE, or may further be determined by a first remote UE according to a service mapping related rule.

For example, for operation (2), when/after receiving a notification message transmitted by a relay UE, a first remote UE indicates an upper layer to trigger reselection of a relay UE for the at least one second remote UE, for example indicates information of the at least one second remote UE. A process in which an upper layer triggers reselection of a relay UE is implemented by referring to related arts, and is not further elaborated here. Information of the second remote UE is described as above and is not further elaborated here.

For example, for operation (3), when/after receiving a notification message transmitted by a relay UE, a first remote UE determines/considers according to a received notification message that a radio link failure for the at least one second remote UE is detected, for example considers that a radio link failure is detected for a PC5-RRC connection or PC5 unicast link (or sidelink) between the first remote UE and the at least one second remote UE.

For example, for operation (4), when/after a first remote UE receives a notification message transmitted by a relay UE, an RRC entity of the first remote UE releases a PC5-RRC connection between the first remote UE and the at least one second remote UE.

For example, for operation (5), when/after receiving a notification message transmitted by a relay UE, a first remote UE indicates to an upper layer to release a PC5-RRC connection with the at least one second remote UE. "Indicating to an upper layer to release a PC5-RRC connection with the at least one second remote UE" refers to: reporting "a first remote UE (such as an RRC layer of a first remote UE) releases a PC5-RRC connection between the first remote UE and the at least one second remote UE" or "a PC5-RRC connection or a PC5 unicast link between a first remote UE and the at least one second remote UE is unavailable" to an upper layer.

For example, for operation (6), when/after receiving a notification message transmitted by a relay UE, a first remote UE performs a sidelink UE information procedure when the first remote UE is in an RRC connected state, for example a first remote UE transmits a sidelink UE information message to a network device (such as a gNB), the message including fourth indication information for indicating a radio link failure for at least one second remote UE. The sidelink UE information procedure may be implemented by referring to related arts. A function of a first remote UE to perform the operation (6) is that for example a first remote UE reports to a gNB that an end-to-end sidelink radio link failure (sidelink RLF, SL RLF) between the first remote UE and a second remote UE occurs, or indicates a gNB to stop allocating sidelink (SL) resources to a second remote UE.

For example, for operation (7), when/after a first remote UE receives a notification message transmitted by a relay UE, the first remote UE releases all Signalling Radio Bearers (SRBs) and/or Data Radio Bearers (DRBs) with the at least one second remote UE. Thus, both connection(s) and service(s) between a first remote UE and a second remote UE will be interrupted.

For example, for operation (8), when/after a first remote UE receives a notification message transmitted by a relay UE, the first remote UE indicates to an upper layer that a PC5 RLF for the at least one second remote UE is received from a relay UE, wherein "indicating to an upper layer that a PC5 RLF for the at least one second remote UE is received from a relay UE" refers to "reporting to an upper layer that a PC5 RLF for the at least one second remote UE is received from a relay UE". Optionally, after receiving the indication, an upper layer of a first remote UE may determine whether to trigger relay reselection.

For example, for operation (9), when/after a first remote UE receives a notification message transmitted by a relay UE, the first remote UE maintains a connection with other second remote UE(s) other than at least one second remote UE as determined according to a notification message, the other second remote UE(s) communicate(s) with the first remote UE via a same relay UE, and the first remote UE does not perform any operation for the other second remote UE(s) for which a relay UE does not detect a radio link failure.

In some embodiments, a first remote UE may perform the above operations (1) to (9) separately, or may perform at least two of the above operations (1) to (9). In a case of performing at least two operations, each operation sequence may be determined according to an actual situation, for example the at least two operations are performed sequentially or simultaneously, or some of the at least two operations are performed simultaneously while others thereof are performed sequentially, etc., for example when performing operations (1), (2) and (9), operations (1), (2) and (9) may be performed simultaneously or sequentially, which is not defined here. When performing operations (4) and (5), operation (4) may be performed first, then operation (5) is performed, for example when performing operation (3) and operation (5), operation (3) may be performed first, then operation (5) is performed. Unless otherwise indicated, the present disclosure does not impose any restrictions on a performing sequence when operations are performed in an associated manner.

In some embodiments, when a notification message includes identification information related to a radio link failure, as described above, a first remote UE may determine at least one second remote UE with a radio link failure according to the identification information. At this point, the method further includes that: a first remote UE performs relevant operations for all second remote UEs communicating with a first remote UE via the relay UE. For example, in UE-to-UE relay, when one first remote UE communicates with one or more than one (or at least two) second remote UE(s) via a same relay UE, if a relay UE detects a radio link failure for some second remote UEs, i.e., when at least one second remote UE still communicates with a relay UE normally on a radio link, the first remote UE performs relevant operations for entire (all) second remote UEs relayed by the relay UE according to a notification message reported by the relay UE. Thus, complexity of a behavior of a first remote UE is able to be reduced, to make a behavior of a first remote UE simple.

In some embodiments, in 402, a notification message received by a first remote UE and transmitted by a relay UE does not include identification information related to a radio link failure. At this point, the method further includes (not shown) that: a first remote UE determines/considers that a radio link failure occurs between a relay UE and entire (all) second remote UEs according to the notification message, and the first remote UE also considers that a radio link failure is detected for entire (all) second remote UEs. In this way, since no identification information needs to be contained in a notification message, signaling overhead may be saved.

In some embodiments, the method further includes that (not shown): a first remote UE performs relevant operations for all second remote UEs communicating with the first remote UE via the relay UE. Thus, in a case where a first remote UE considers that a radio link failure occurs for entire (all) second remote UEs, the first remote UE performs relevant operations for all second remote UEs, to make a behavior of a first remote UE simple.

In some embodiments, when a first remote UE performs relevant operations for all second remote UEs communicating with the first remote UE via the relay UE, relevant operations performed by the first remote UE on all second remote UEs include:
(10) indicating information of all the second remote UEs to an upper layer, the information including at least one of the following information: an L2 identifier of a second remote UE, a PC5 unicast link identifier between a first remote UE and a second remote UE, a pair of an L2 identifier of a first remote UE and an L2 identifier of a second remote UE,
(11) indicating an upper layer to trigger reselection of a relay UE for all the second remote UEs,
(12) determining/considering that the relay UE detects a radio link failure for all the second remote UEs and/or determining/considering that a radio link failure is detected for all the second remote UEs,
(13) releasing a PC5-RRC connection with all the second remote UEs,
(14) indicating to an upper layer to release a PC5-RRC connection with all the second remote UEs,
(15) executing a sidelink UE information procedure when the first remote UE is in an RRC connected state,
(16) releasing all SRBs and/or DRBs with all the second remote UEs, or
(17) indicating to an upper layer that a PC5 RLF for all the second remote UEs is received from a relay UE.

The above operations (10) to (17) correspond to the operations (1) to (8) in the preceding text one by one. The only difference lies in that in operations (10) to (17), a first remote UE performs operations for all second remote UEs relayed via a same relay UE, while in operations (1) to (8), a first remote UE performs operations for at least one second remote UE with a radio link failure indicated in a notification message transmitted by a relay UE. Therefore, operations (10) to (17) may be implemented by referring to corresponding operations in the preceding text, and are not repeated here.

As may be known from the above embodiments, in UE-to-UE relay, one first remote UE may communicate with at least one second remote UE (which may also be called a peer remote UE) through relay via a same relay UE. When a relay UE detects a radio link failure for at least one second remote UE, the relay UE transmits a notification message to the first remote UE, thus a first remote UE is able to perform relevant operations for some (one or more than one) or entire (all) second remote UEs when a radio link failure occurs according to the notification message. The notification message may include identification information related to a radio link failure, the identification information related to a radio link failure including identification information related to at least one second remote UE with a radio link failure. Thus, a first remote UE may determine at least one second remote UE with a radio link failure according to the notification message, then perform operations for the at least one second remote UE (some, excluding all) or entire (all) second remote UEs. When a first remote UE performs operations for the at least one second remote UE, if a radio link failure occurs for a relay UE and some second remote UEs, communication of a second remote UE normally communicating with the relay UE on a radio link will not be affected, thus service interruption time of a first remote UE and a second remote UE still communicating normally is able to be avoided, and user experience is enhanced. When a first remote UE performs relevant operations for all second remote UEs, complexity of a behavior of a first remote UE is able to be reduced, to make a behavior of a first remote UE simple. In addition, the notification message may further not include identification information related to a radio link failure. After receiving the notification message, a first remote UE performs relevant operations for all second remote UEs, which may reduce signaling overhead and make a behavior of a first remote UE simple.

FIG. 5 is a schematic diagram of an information receiving method in embodiments of the present disclosure. As shown in FIG. 3 and FIG. 5, the method is applicable to a relay UE, the method including:
501, communicating with a first remote UE and at least one of second remote UEs, and
502, transmitting a notification message to the first remote UE, the notification message being used to indicate a radio link failure between the relay UE and at least one of the second remote UEs.

It is worth noting that the above FIG. 5 only schematically describes embodiments of the present disclosure, however the present disclosure is not limited thereto. For example, an execution sequence of each operation may be adjusted appropriately, moreover some other operations may be added or removed. Persons skilled in the art may make appropriate modifications according to the above contents, not being limited to records in the above FIG. 5.

501 to 502 in FIG. 5 correspond to 401 to 402 in FIG. 4, the same contents are not elaborated in the following text. In some embodiments, in 501, a first remote UE communicates with at least one second remote UE via a relay UE, the number of the second remote UEs may be one, or may be more than one, for example the number of second remote UEs in a scenario shown in FIG. 3 is two, the present disclosure does not impose restrictions thereto.

In some embodiments, in 501, communications between a first remote UE and a relay UE and between the relay UE and a second remote UE are performed via a radio link, the radio link being a PC5 radio link or a PC5 unicast link or a sidelink, a corresponding radio link failure is called a PC5 radio link failure (PC5 RLF) or a sidelink radio link failure (SL RLF).

In some embodiments, in 502, a notification message transmitted by a relay UE to a first remote UE includes identification information related to a radio link failure. The notification message is as described above, contents thereof are incorporated here and are not further elaborated here.

In some embodiments, the identification information includes a Layer 2 (L2) identifier of a second remote UE, or a pair of an L2 identifier of a first remote UE and an L2 identifier of a second remote UE. For example, an L2 identifier of the first remote UE may be determined by a V2X layer of a first remote UE according to an existing method, an L2 identifier of a second remote UE may be determined by a V2X layer of a second remote UE according to an existing method and be notified to a first remote UE, wherein a length of an L2 identifier is 24 bits.

In some embodiments, the identification information includes a Local identifier (local ID) of a second remote UE, and a local ID of the second remote UE is notified by a relay UE to a first remote UE. For example, a local identifier (local ID) of a second remote UE is allocated by a relay UE to a second remote UE, and in a process in which a first remote UE and a second remote UE perform data transmission, the local identifier of the second remote UE is contained in an SRAP header.

In some embodiments, the identification information includes: a pair of a local identifier of a first remote UE and a local identifier of a second remote UE, i.e., a local identifier pair of a first remote UE and a second remote UE. For example, a local identifier of a first remote UE is allocated by a relay UE to a first remote UE, a local identifier of a second remote UE is allocated by a relay UE to a second remote UE and notified by a relay UE to a first remote UE, and in a process in which a first remote UE and a second remote UE perform data transmission, the pair of a local identifier of a first remote UE and a local identifier of the second remote UE is contained in an SRAP header.

Lengths of a local identifier of the first remote UE and a local identifier of a second remote UE may be less than 24 bits, for example may be 4 bits, 8 bits or 12 bits, etc. Assuming that lengths of both a local ID of a first remote UE and a local ID of a second remote UE are 8 bits, a length of a pair of a local identifier of a first remote UE and a local identifier of a second remote UE is 16 bits. For specific contents and determining methods of local identifiers, related arts may be referred to, the present disclosure does not define in this regard.

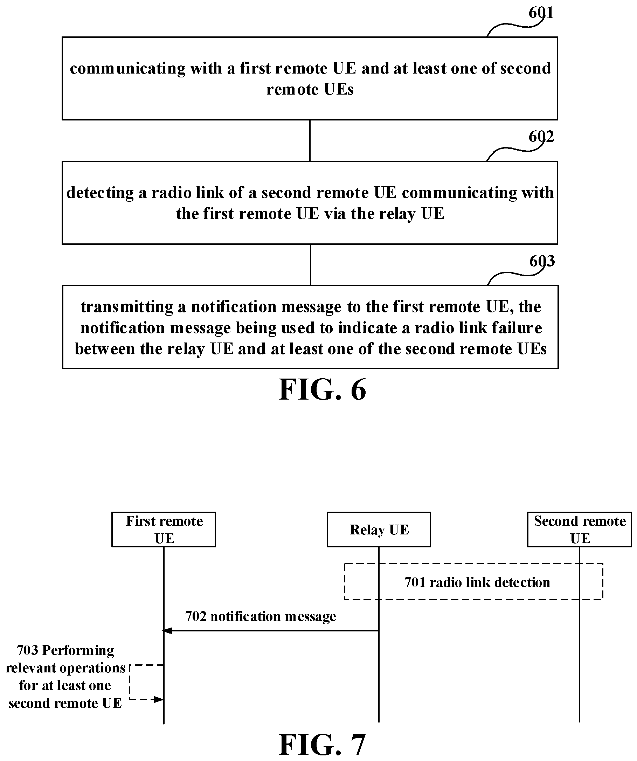

FIG. 6 is another schematic diagram of an information receiving method in the embodiments of the present disclosure. As shown in FIG. 3 and FIG. 6, the method is applicable to a relay UE, the method including:
601, communicating with a first remote UE and at least one of second remote UEs,
602, detecting a radio link of a second remote UE communicating with the first remote UE via the relay UE, and
603, transmitting a notification message to the first remote UE, the notification message being used to indicate a radio link failure between the relay UE and at least one of the second remote UEs.

It is worth noting that the above FIG. 6 only schematically describes embodiments of the present disclosure, however the present disclosure is not limited thereto. For example, an execution sequence of each operation may be adjusted appropriately, moreover some other operations may be added or removed. Persons skilled in the art may make appropriate modifications according to the above contents, not being limited to records in the above FIG. 6.

Contents of 601 and 603 in FIG. 6 are similar to contents of 501 and 502 in FIG. 5 respectively, said contents are incorporated here, the same contents are not further elaborated in the following text.

In some embodiments, in 602, a relay UE detects radio links of all second remote UEs communicating with a first remote UE via the relay UE, and when a radio link failure between at least one second remote UE and a relay UE is detected, the relay UE may perform the above step 603.

FIG. 7 is a schematic diagram of an information transmitting and receiving method provided by embodiments of the present disclosure. The method is applied to a communication system shown in FIG. 2 or 3, and as shown in FIG. 7, the method includes that:
701, a relay UE detects a radio link of a second remote UE communicating with the first remote UE via the relay UE, and
702, when detecting a radio link failure for at least one second remote UE, the relay UE transmits a notification message to the first remote UE, the notification message being used to indicate a radio link failure between the relay UE and at least one second remote UE.

Content of 701 in FIG. 7 is similar to content of 602 in FIG. 6, content of 702 in FIG. 7 is similar to content of 502 in FIG. 5, said contents are incorporated here, and the same contents are not further elaborated in the following text.

In some embodiments, after 702, the method may further include that:
703, a first remote UE performs relevant operations for at least one second remote UE according to the notification message.

In some embodiments, when a notification message includes identification information related to a radio link failure, as described above, a first remote UE may determine at least one second remote UE for which a radio link failure with a relay UE occurs according to the identification information. Thus, a first remote UE performs relevant operations for at least one second remote UE for which a radio link failure with a relay UE occurs. For example, a first remote UE performs relevant operations for a second remote UE corresponding to/associated with the identification information. Thus, in UE-to-UE relay, when one first remote UE communicates with more than one (or at least two) second remote UE(s) via a same relay UE, if a relay UE detects a radio link failure for some (one or more than one, excluding all) second remote UEs, i.e., when at least one second remote UE still communicates with a relay UE normally on a radio link, a first remote UE performs relevant operations only for the (one or more than one) second remote UE(s) for which a radio link failure occurs according to a notification message reported by a relay UE, normal communication of a second remote UE with a relay UE on a radio link is not affected. Thus, service interruption between a first remote UE and a second remote UE capable of communicating normally is able to be avoided, and user experience is enhanced.

For relevant operations performed by a first remote UE on at least one second remote UE and determined according to a notification message, such as at least one of the operations (1) to (9) mentioned earlier, contents of the above operations (1) to (9) are incorporated here and are not repeated here.

In some embodiments, when the notification message includes identification information related to a radio link failure, as described above, a first remote UE may determine at least one second remote UE with a radio link failure according to the identification information. At this point, the method further includes that: a first remote UE performs relevant operations for all second remote UEs communicating with the first remote UE via the relay UE. For example, in UE-to-UE relay, when one first remote UE communicates with one or more than one (or at least two) second remote UE(s) via a same relay UE, if a relay UE detects a radio link failure for some second remote UEs, i.e., when at least one second remote UE still communicates with a relay UE normally on a radio link, a first remote UE performs relevant operations for all second remote UEs relayed by a relay UE according to a notification message reported by the relay UE. Thus, complexity of a behavior of a first remote UE is able to be reduced, to make a behavior of a first remote UE simple.

In some embodiments, in 702, a notification message received by a first remote UE and transmitted by a relay UE does not include identification information related to a radio link failure. At this point, the method further includes that (not shown): a first remote UE determines/considers that a radio link failure occurs between a relay UE and entire (all) second remote UEs according to the notification message, and a first remote UE may further consider that a radio link failure is detected for entire (all) second remote UEs. Further, the method further includes 703-1 that: a first remote UE performs relevant operations for all second remote UEs communicating with the first remote UE via the relay UE. Thus, in a case where a first remote UE considers that a radio link for entire (all) second remote UEs fails, a first remote UE performs relevant operations for all second remote UEs, to make a behavior of a first remote UE simple.

For relevant operations performed by a first remote UE on all second remote UEs communicating with the first remote UE via the relay UE, such as at least one of the operations (10) to (17) mentioned earlier, contents of the above operations (10) to (17) are incorporated here and are not repeated here.

As may be known from the above embodiments, in UE-to-UE relay, one first remote UE may communicate with at least one second remote UE (which may also be called a peer remote UE) through relay via a same relay UE. When detecting a radio link failure for at least one second remote UE, a relay UE transmits a notification message to a first remote UE, thus a first remote UE is able to perform relevant operations on some (one or more than one, excluding all) or entire (all) second remote UEs when a radio link failure occurs according to the notification message. The notification message may include identification information related to a radio link failure, the identification information related to a radio link failure including identification information related to at least one second remote UE with a radio link failure. Thus, a first remote UE may determine at least one second remote UE with a radio link failure according to the notification message, then perform operations for the at least one second remote UE (some, excluding all) or entire (all) second remote UEs. When a first remote UE performs operations for the at least one second remote UE, if a radio link failure occurs for a relay UE and some second remote UEs, communication of a second remote UE normally communicating with a relay UE on a radio link will not be affected, thus service interruption time of a first remote UE and a second remote UE still communicating normally is able to be avoided, and user experience is enhanced. When a first remote UE performs relevant operations for all second remote UEs, complexity of a behavior of a first remote UE is able to be reduced, to make a behavior of a first remote UE simple. In addition, the notification message may further not include identification information related to a radio link failure. After receiving the notification message, a first remote UE performs relevant operations for all second remote UEs, to make a behavior of a first remote UE simple.

### Embodiments of a Second Aspect

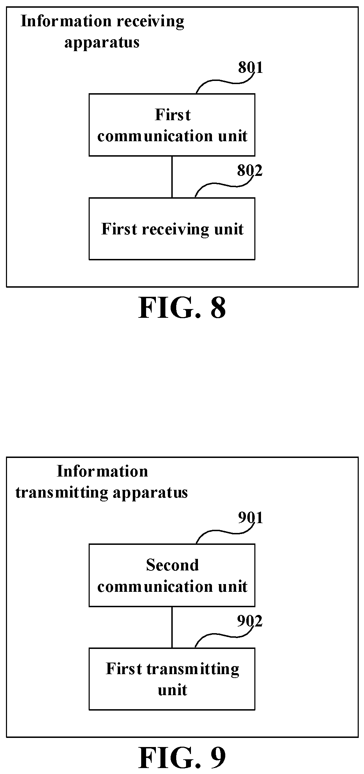

Embodiments of the present disclosure provide an information receiving apparatus, applicable to a first remote UE. FIG. 8 is a schematic diagram of the information receiving apparatus. The information receiving apparatus and an information receiving method in the embodiments of the first aspect provided by the present disclosure are produced based on the same inventive idea, principles for solving problems are similar, therefore for implementation of an information receiving apparatus, implementation of an information receiving method in the embodiments of the first aspect provided by the present disclosure may be referred to, repetitions are not further elaborated. As used below, the term "unit" or "module" may implement a combination of software and/or hardware having predetermined functions. Although a system described in the following embodiments is better implemented using software, implementation of hardware or a combination of software and hardware may also be possible and conceived.

As shown in FIG. 8, the information receiving apparatus includes:
a first communication unit 801 configured to communicate with at least one of second remote UEs via a relay UE; and
a first receiving unit 802 configured to receive a notification message transmitted by the relay UE, the notification message being used to indicate a radio link failure between the relay UE and at least one of the second remote UEs.

In some embodiments, the first communication unit 801 communicates with at least one of second remote UEs via a relay UE, the number of the second remote UEs may be one, or may be more than one, for example the number of second remote UEs in a scenario shown in FIG. 3 is two, the present disclosure does not impose restrictions thereto. Communications between the first communication unit 801 and a relay UE and between the relay UE and a second remote UE are performed via a radio link, the radio link being a PC5 radio link or a PC5 unicast link or a sidelink, a corresponding radio link failure is called a PC5 radio link failure (PC5 RLF) or a sidelink radio link failure (Sidelink RLF).

In some embodiments, the first receiving unit 802 receives a notification message transmitted by a relay UE, the notification message may indicate a radio link failure between the relay UE and some second remote UEs (such as one or more than one second remote UE) or entire (all) second remote UEs. Thus, the remote UE is able to know which one or which or entire peer remote UEs is/are unable to be communicated normally according to the notification message.

In some embodiments, the notification message includes identification information related to a radio link failure.

The notification message may be transmitted via a PC5-RRC message, and may be an existing *NotificationMessageSidelink* message or a new PC5-RRC message different from an existing PC5-RRC message. Identification information related to a radio link failure in the notification message includes identification information related to at least one second remote UE with a radio link failure. For example, identification information related to a second remote UE is identification information able to be mapped to a second remote UE, or identification information able to be mapped to a PC5 connection or sidelink between a relay UE and a second remote UE, or identification information able to be mapped to a PC5 connection or sidelink between a first remote UE and a second remote UE. A first remote UE is able to determine a second remote UE associated with/corresponding to the identification information according to the identification information. For example, a first remote UE determines a second remote UE associated with/ corresponding to the identification information according to the identification information as well as an association relationship/correspondence relationship between identification information and a second remote UE or an application or service of a second remote UE. Information of the association relationship/correspondence relationship may be information stored by the first remote UE when leaving factory, or may be information configured by a network side, or information configured by a relay UE and existing in the first remote UE, or may be determined by a first remote UE according to a service mapping related rule. In addition, the identification information may include one or more than one. When the number of the identification information is one, the notification message indicates that the relay UE detects a radio link failure with one second remote UE, and when the number of the identification information is more than one, the notification message indicates that the relay UE detects radio link failures with more than one second remote UE. Thus, a first remote UE is able to determine that a relay UE detects at least one second remote UE with a radio link failure according to identification information related to a radio link failure in the notification message. For a method for a relay UE to detect a radio link failure with a second remote UE, related arts may be referred to, further elaboration is omitted here.

In some embodiments, the identification information includes a Layer 2 (L2) identifier of a second remote UE, or a pair of an L2 identifier of a first remote UE and an L2 identifier of a second remote UE. For example, an L2 identifier of the first remote UE may be determined by a V2X layer of a first remote UE according to an existing method, an L2 identifier of a second remote UE may be determined by a V2X layer of a second remote UE according to an existing method and be notified to a first remote UE, wherein a length of an L2 identifier is 24 bits.

In some embodiments, the identification information includes a Local identifier (local ID) of a second remote UE, and a local ID of the second remote UE is notified by a relay UE to a first remote UE. For example, a local identifier (local ID) of a second remote UE is allocated by a relay UE to a second remote UE, and in a process in which a first remote UE and a second remote UE perform data transmission, the local identifier of the second remote UE is contained in an SRAP header.

In some embodiments, the identification information includes: a pair of a local identifier of a first remote UE and a local identifier of a second remote UE, i.e., a local identifier pair of a first remote UE and a second remote UE. For example, a local identifier of a first remote UE is allocated by a relay UE to a first remote UE, a local identifier of a second remote UE is allocated by a relay UE to a second remote UE and notified by a relay UE to a first remote UE, and in a process in which a first remote UE and a second remote UE perform data transmission, the pair of a local identifier of a first remote UE and a local identifier of the second remote UE is contained in an SRAP header.

Lengths of a local identifier of the first remote UE and a local identifier of a second remote UE may be less than 24 bits, for example may be 4 bits, 8 bits or 12 bits, etc. Assuming that lengths of both a local ID of a first remote UE and a local ID of a second remote UE are 8 bits, a length of a pair of a local identifier of a first remote UE and a local identifier of a second remote UE is 16 bits. For specific contents and determining methods of local identifiers, related arts may be referred to, the present disclosure does not define in this regard.

In some embodiments, when a notification message includes identification information related to a radio link failure, as described above, a first remote UE may determine at least one second remote UE for which a radio link failure with a relay UE according to the identification information. Therefore, the information receiving apparatus further includes a first operation unit 803 (not shown) configured to: perform relevant operations for the at least one second remote UE. For example, a first remote UE performs relevant operations for a second remote UE corresponding to/associated with the identification information. Thus, in UE-to-UE relay, when one first remote UE communicates with more than one (or at least two) second remote UE(s) via a same relay UE, if a relay UE detects a radio link failure for some (one or more than one, excluding all) second remote UEs, i.e., when at least one second remote UE still communicates with a relay UE normally on a radio link, a first remote UE performs relevant operations only for the (one or more than one) second remote UE(s) for which a radio link failure occurs according to a notification message reported by a relay UE, normal communication of a second remote UE with a relay UE on a radio link is not affected. Thus, service interruption between a first remote UE and a second remote UE capable of communicating normally is able to be avoided, and user experience is enhanced.

In some embodiments, the relevant operations include at least one of the following:
(1) indicating information of the at least one second remote UE to an upper layer, the information including at least one of the following information: an L2 identifier of a second remote UE, a PC5 unicast link identifier between a first remote UE and a second remote UE, a pair of an L2 identifier of a first remote UE and an L2 identifier of a second remote UE,
(2) indicating an upper layer to trigger reselection of a relay UE for the at least one second remote UE,
(3) determining/considering that a radio link failure is detected for the at least one second remote UE,
(4) releasing a PC5-RRC connection with the at least one second remote UE,
(5) indicating to an upper layer to release a PC5-RRC connection with the at least one second remote UE,
(6) executing a sidelink UE information procedure when the first remote UE is in an RRC connected state,
(7) releasing all SRBs and/or DRBs with the second remote UE,
(8) indicating to an upper layer that a PC5 RLF for the second remote UE is received from a relay UE, or
(9) maintaining a connection with a second remote UE for which a radio link with the relay UE does not fail, of second remote UEs communicating with the first remote UE via the relay UE.

In some embodiments, the upper layer includes a V2X layer or an NAS layer.

Relevant operations (1) to (9) in the above embodiments are similar to operations (1) to (9) in the embodiments of the first aspect, and may be implemented by reference thereto, a repeated description is omitted here.

In some embodiments, when a notification message includes identification information related to a radio link failure, as described above, a first remote UE may determine at least one second remote UE with a radio link failure according to the identification information. At this point, the first operation unit 803 (not shown) may further be used for: a first remote UE to perform relevant operations for all second remote UEs communicating with the first remote UE via the relay UE. For example, in UE-to-UE relay, when one first remote UE communicates with one or more than one (or at least two) second remote UE(s) via a same relay UE, if a relay UE detects a radio link failure for some second remote UEs, i.e., when at least one second remote UE still communicates with a relay UE normally on a radio link, the first remote UE performs relevant operations for all second remote UEs relayed by the relay UE according to a notification message reported by the relay UE. Thus, complexity of a behavior of a first remote UE is able to be reduced, to make a behavior of a first remote UE simple.

In some embodiments, a notification message received by a first remote UE and transmitted by a relay UE does not include identification information related to a radio link failure. At this point, a first remote UE determines/considers that a radio link failure occurs between a relay UE and entire (all) second remote UEs according to the notification message, and the first remote UE also considers that a radio link failure is detected for entire (all) second remote UEs. The information receiving apparatus further includes a second operation unit 804 (not shown): a first remote UE performs relevant operations for all second remote UEs communicating with the first remote UE via the relay UE. Thus, in a case where a first remote UE considers that a radio link failure occurs for entire (all) second remote UEs, the first remote UE performs relevant operations for all second remote UEs, to make a behavior of a first remote UE simple.

In some embodiments, relevant operations performed by a first remote UE on all second remote UEs communicating with the first remote UE via the relay UE include at least one of the following:
(10) indicating information of all the second remote UEs to an upper layer, the information including at least one of the following information: an L2 identifier of a second remote UE, a PC5 unicast link identifier between a first remote UE and a second remote UE, a pair of an L2 identifier of a first remote UE and an L2 identifier of a second remote UE,
(11) indicating an upper layer to trigger reselection of a relay UE for all the second remote UEs,
(12) determining that the relay UE detects a radio link failure for all the second remote UEs and/or determining/considering that a radio link failure is detected for all the second remote UEs,
(13) releasing a PC5-RRC connection with all the second remote UEs,
(14) indicating to an upper layer to release a PC5-RRC connection with all the second remote UEs,
(15) executing a sidelink UE information procedure when the first remote UE is in an RRC connected state,
(16) releasing all SRBs and/or DRBs with all the second remote UEs, or
(17) indicating to an upper layer that a PC5 RLF for all the second remote UEs is received from a relay UE.

Relevant operations (10) to (17) in the above embodiments are similar to the operations (10) to (17) in the embodiments of the first aspect, and may be implemented by reference thereto, a repeated description is omitted here.

Embodiments of the present disclosure further provide an information transmitting apparatus, FIG. 9 is a schematic diagram of the information transmitting apparatus. The information transmitting apparatus and an information transmitting method in the embodiments of the first aspect provided by the present disclosure are produced based on the same inventive idea, principles for solving problems are similar, therefore for implementation of an information transmitting apparatus, implementation of an information transmitting method in the embodiments of the first aspect provided by the present disclosure may be referred to, repetitions are not further elaborated. As used below, the term "unit" or "module" may implement a combination of software and/or hardware having predetermined functions. Although a system described in the following embodiments is better implemented using software, implementation of hardware or a combination of software and hardware may also be possible and conceived.

As shown in FIG. 9, the information receiving apparatus includes:
a second communication unit 901 configured to communicate with a first remote UE and at least one of second remote UEs; and
a first transmitting unit 902 configured to transmit a notification message to the first remote UE, the notification message being used to indicate a radio link failure between the relay UE and at least one of the second remote UEs.

In some embodiments, the notification message includes identification information related to a radio link failure.

In some embodiments, the identification information includes at least one of the following information:
an L2 identifier of a second remote UE;
a local identifier of a second remote UE;
a pair of an L2 identifier of a first remote UE and an L2 identifier of a second remote UE; or
a pair of a local identifier of a first remote UE and a local identifier of a second remote UE.

In some embodiments, a local identifier of the first remote UE and/or a local identifier of a second remote UE is/are allocated by the relay UE.

In some embodiments, in a process in which the first remote UE and the second remote UE perform data transmission, a local identifier of the first remote UE and a local identifier of the second remote UE are included in an SRAP header.

In some embodiments, the apparatus further includes:
a detection unit configured to detect a radio link with a second remote UE communicating with the first remote UE via the relay UE;
and the first transmitting unit transmits the notification message to the first remote UE when detecting a radio link failure with at least one of the second remote UEs.

In some embodiments, the notification message is transmitted via a PC5-RRC message.

Moreover, for the sake of simplicity, FIG. 8 and FIG. 9 only exemplarily show a connection relationship or signal direction between components or modules, however persons skilled in the art should know that various relevant technologies such as bus connection may be used. The above components or modules may be implemented via a hardware facility such as a processor, a memory, a transmitter, a receiver, etc. Embodiments of the present disclosure do not impose limitations thereto.

As may be known from the above embodiments, in UE-to-UE relay, one first remote UE may communicate with at least one second remote UE (which may also be called a peer remote UE) through relay via a same relay UE. When detecting a radio link failure for at least one second remote UE, a relay UE transmits a notification message to a first remote UE, thus a first remote UE is able to perform relevant operations on some (one or more than one, excluding all) or entire (all) second remote UEs when a radio link failure occurs according to the notification message. The notification message may include identification information related to a radio link failure, the identification information related to a radio link failure including identification information related to at least one second remote UE with a radio link failure. Thus, a first remote UE may determine at least one second remote UE with a radio link failure according to the notification message, then perform operations for the at least one second remote UE (some, excluding all) or entire (all) second remote UEs. When a first remote UE performs operations for the at least one second remote UE, if a radio link failure occurs for a relay UE and some second remote UEs, communication of a second remote UE normally communicating with a relay UE on a radio link will not be affected, thus service interruption time of a first remote UE and a second remote UE still communicating normally is able to be avoided, and user experience is enhanced. When a first remote UE performs relevant operations for all second remote UEs, complexity of a behavior of a first remote UE is able to be reduced, to make a behavior of a first remote UE simple. In addition, the notification message may further not include identification information related to a radio link failure. After receiving the notification message, a first remote UE performs relevant operations for all second remote UEs, to make a behavior of a first remote UE simple.

Each of the above embodiments is only illustrative for embodiments of the present disclosure, but the present disclosure is not limited thereto, appropriate modifications may be further made based on each of the embodiments. For example, each of the above embodiments may be used individually, or one or more of the above embodiments may be combined.

It's worth noting that the above text only describes steps related to the present disclosure, however the present disclosure is not limited thereto. The method in the present disclosure may further include other steps. For specific contents of these steps, relevant technologies may be referred to.

### Embodiments of a Third Aspect

Embodiments of the present disclosure provide a communication system, FIG. 2 or FIG. 3 may be referred to, the communication system includes a first remote UE 201, a relay UE 203 and a second remote UE 202, wherein the number of second remote UEs 202 is at least one, for example FIG. 2 and FIG. 3 show two second remote UEs 202-1 and 202-2.

In embodiments of the present disclosure, the first remote UE 201 is configured to perform an information receiving method in the first aspect of the present disclosure, contents thereof are incorporated here and are not further elaborated.

In embodiments of the present disclosure, the relay UE 203 is configured to perform an information transmitting method in the first aspect of the present disclosure, contents thereof are incorporated here and are not further elaborated.

In embodiments of the present disclosure, the second remote UE 202 is configured to communicate with the first remote UE 201 via the relay UE 203.

In UE-to-UE relay, one remote UE communicates with at least one peer remote UE via a same relay UE, and a relay UE detects a radio link failure (RLF) for a peer remote UE and transmits a notification message to a remote UE, indicating a radio link failure for at least one peer remote UE, thus the remote UE is able to perform relevant operations for some (including one or more than one) or entire (i.e., all) peer remote UEs when a radio link failure occurs according to the notification message.

### Embodiments of a Fourth Aspect

Embodiments of the present disclosure provide a terminal equipment.

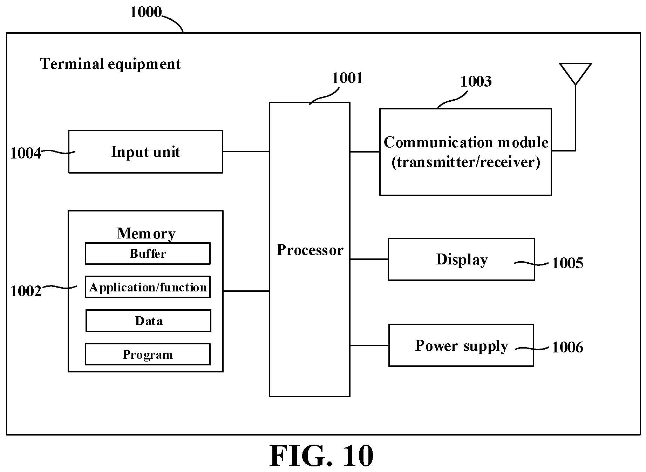

FIG. 10 is a schematic diagram of composition of a terminal equipment in embodiments of the present disclosure, the terminal equipment may be a remote terminal equipment. As shown in FIG. 10, the terminal equipment 1000 may include a processor 1001 and a memory 1002, a memory 1002 stores data and programs and is coupled to a processor 1001. It's worth noting that this figure is exemplary, other types of structures may also be used to supplement or replace this structure, so as to implement a telecommunication function or other functions.

For example, a processor 1001 may be configured to execute a program to implement an information receiving method described in the embodiments of the first aspect, at this point, the terminal equipment 1000 e.g. is a remote UE. Processor 1001 e.g. may be configured to perform the following operation: communicating with at least one of second remote UEs via a relay UE, receiving a notification message transmitted by the relay UE, the notification message being used to indicate a radio link failure between the relay UE and at least one of the second remote UEs.

For another example, a processor 1001 may be configured to execute a program to implement an information transmitting method described in the embodiments of the first aspect, at this point, the terminal equipment 1000 e.g. is a relay UE. Processor 1001 e.g. may be configured to perform the following operation: communicating with a first remote UE and at least one of second remote UEs, transmitting a notification message to the first remote UE, the notification message being used to indicate a radio link failure between the relay UE and at least one of the second remote UEs.

As shown in FIG. 10, the terminal equipment 1000 may further include: a communication module 1003, an input unit 1004, a display 1005 and a power supply 1006. Functions of said components are similar to related arts, and are not further elaborated here. It's worth noting that a terminal equipment 1000 does not have to include all components shown in FIG. 10, the components are not indispensable. Moreover, a terminal equipment 1000 may further include components not shown in FIG. 10, relevant technologies may be referred to.

Embodiments of the present disclosure further provide a computer readable program, wherein when the program is executed in a terminal equipment, the program enables a computer to execute an information receiving method described in the embodiments of the first aspect, in the relay terminal equipment.

Embodiments of the present disclosure further provide a computer readable program, wherein when the program is executed in a terminal equipment, the program enables a computer to execute an information transmitting method described in the embodiments of the first aspect, in the relay terminal equipment.

Embodiments of the present disclosure further provide a storage medium storing a computer readable program, wherein the computer readable program enables a computer to execute an information receiving method described in the embodiments of the first aspect of the present disclosure, in a terminal equipment.

Embodiments of the present disclosure further provide a storage medium storing a computer readable program, wherein the computer readable program enables a computer to execute an information transmitting method described in the embodiments of the first aspect of the present disclosure, in a terminal equipment.

Apparatuses and methods in the present disclosure may be implemented by hardware, or may be implemented by combining hardware with software. The present disclosure relates to such a computer readable program, when the program is executed by a logic component, the logic component is able to implement the apparatuses described in the above text or a constituent component, or the logic component is able to implement various methods or steps described in the above text. The present disclosure further relates to a storage medium storing the program, such as a hard disk, a magnetic disk, an optical disk, a DVD, a flash memory and the like.

By combining with methods/apparatuses described in embodiments of the present disclosure, it may be directly embodied as hardware, a software module executed by a processor, or a combination of the two. For example, one or more of functional block diagrams or one or more combinations of a functional block diagram as shown in the drawings may correspond to software modules of a computer program flow, or may correspond to hardware modules. These software modules may respectively correspond to steps shown in the drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thus enabling a processor to read information from the storage medium, and write information into the storage medium, or the storage medium may be a constituent part of a processor. A processor and a storage medium may be located in an ASIC. The software module may be stored in a memory of a mobile terminal, or may be stored in a memory card of a mobile terminal. For example, if a device (such as a mobile terminal) adopts a MEGA-SIM card with a larger capacity or a flash memory apparatus with a large capacity, the software module may be stored in the MEGA-SIM card or flash memory apparatus with a large capacity.

One or more of functional block diagrams or one or more combinations of a functional block diagram as described in the drawings may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams or one or more combinations of a functional block diagram as described in the drawings may further be implemented as a combination of computer devices, such as a combination of a DSP and a microprocessor, a plurality of microprocessors, one or more microprocessors combined and communicating with a DSP, or any other such configuration.

The present disclosure is described by combining with specific implementations, however persons skilled in the art should clearly know that these descriptions are exemplary and do not limit a protection scope of the present disclosure. Persons skilled in the art may make various variations and amendments to the present disclosure according to a principle of the present disclosure, these variations and amendments are also within a scope of the present disclosure.

As for implementations including the above embodiments, the following supplements are further disclosed:
1. A remote UE, including a memory configured to store a computer program, and a processor configured to execute the computer program to implement any information receiving method described in embodiments of the present disclosure.
2. A relay UE, including a memory configured to store a computer program, and a processor configured to execute the computer program to implement any information transmitting method described in embodiments of the present disclosure.

## Claims

1. An information receiving apparatus, applicable to a first remote UE, the apparatus comprising:
a first communication unit configured to communicate with at least one of second remote UEs via a relay UE; and
a first receiving unit configured to receive a notification message transmitted by the relay UE, the notification message being used to indicate a radio link failure between the relay UE and at least one of the second remote UEs.

2. The apparatus according to claim 1, wherein the notification message comprises identification information related to a radio link failure.

3. The apparatus according to claim 2, wherein the identification information comprises at least one of the following information:
an L2 identifier of a second remote UE;
a local identifier of a second remote UE;
a pair of an L2 identifier of a first remote UE and an L2 identifier of a second remote UE; or
a pair of a local identifier of a first remote UE and a local identifier of a second remote UE.

4. The apparatus according to claim 3, wherein a local identifier of the first remote UE and/or a local identifier of the second remote UE is/are allocated by the relay UE.

5. The apparatus according to claim 3, wherein in a process in which the first remote UE and the second remote UE perform data transmission, a local identifier of the first remote UE and a local identifier of the second remote UE are included in an SRAP header.

6. The apparatus according to claim 2, wherein the apparatus further comprises:
a first operation unit configured to: perform relevant operations for at least one second remote UE.

7. The apparatus according to claim 6, wherein the relevant operations comprise at least one of the following:
indicating information of the at least one second remote UE to an upper layer, the information comprising at least one of the following information: an L2 identifier of a second remote UE, a PC5 unicast link identifier between a first remote UE and a second remote UE, a pair of an L2 identifier of a first remote UE and an L2 identifier of a second remote UE,
indicating an upper layer to trigger reselection of a relay UE for the at least one second remote UE,
determining that the relay UE detects a radio link failure for the at least one second remote UE,
indicating to an upper layer to release a PC5-RRC connection with the at least one second remote UE,
releasing a PC5-RRC connection with the at least one second remote UE,
executing a sidelink UE information procedure when the first remote UE is in an RRC connected state,
releasing all SRBs and/or DRBs with the at least one second remote UE,
indicating to an upper layer to receive a PC5 RLF for the at least one second remote UE from the relay UE, or
maintaining a connection with a second remote UE for which a radio link with the relay UE does not fail, of second remote UEs communicating with the first remote UE via the relay UE.

8. The apparatus according to claim 7, wherein the upper layer comprises a V2X layer and an NAS layer.

9. The apparatus according to claim 1, wherein the apparatus further comprises
a second operation unit configured to: perform relevant operations for all second remote UEs communicating with the first remote UE via the relay UE.

10. The apparatus according to claim 9, wherein the relevant operations comprise at least one of the following:
indicating information of the all second remote UEs to an upper layer, the information comprising at least one of the following information: an L2 identifier of a second remote UE, a PC5 unicast link identifier between a first remote UE and a second remote UE, a pair of an L2 identifier of a first remote UE and an L2 identifier of a second remote UE,
indicating an upper layer to trigger reselection of a relay UE for the all second remote UEs,
determining that the relay UE detects a radio link failure for the all second remote UEs,
indicating to an upper layer to release a PC5-RRC connection with the all second remote UEs,
releasing a PC5-RRC connection with the all second remote UEs,
executing a sidelink UE information procedure when the first remote UE is in an RRC connected state,
releasing all SRBs and/or DRBs with the all second remote UEs, or
indicating to an upper layer to receive a PC5 RLF for the all second remote UEs from the relay UE.

11. The apparatus according to claim 1, wherein the notification message is transmitted via a PC5-RRC message.

12. The apparatus according to claim 1, wherein the radio link is a PC5 radio link or a PC5 unicast link.

13. An information transmitting apparatus, applicable to a relay UE, the apparatus comprising:
a second communication unit configured to communicate with a first remote UE and at least one of second remote UEs; and
a first transmitting unit configured to transmit a notification message to the first remote UE, the notification message being used to indicate a radio link failure between the relay UE and at least one of the second remote UEs.

14. The apparatus according to claim 13, wherein the notification message comprises identification information related to a radio link failure.

15. The apparatus according to claim 14, wherein the identification information comprises at least one of the following information:
an L2 identifier of a second remote UE;
a local identifier of a second remote UE;
a pair of an L2 identifier of a first remote UE and an L2 identifier of a second remote UE; or
a pair of a local identifier of a first remote UE and a local identifier of a second remote UE.

16. The apparatus according to claim 15, wherein a local identifier of the first remote UE and/or a local identifier of the second remote UE is/are allocated by the relay UE.

17. The apparatus according to claim 15, wherein in a process in which the first remote UE and the second remote UE perform data transmission, a local identifier of the first remote UE and a local identifier of the second remote UE are included in an SRAP header.

18. The apparatus according to claim 13, wherein the apparatus further comprises:
a detection unit configured to detect a radio link with a second remote UE communicating with the first remote UE via the relay UE,
and the first transmitting unit transmits the notification message to the first remote UE when detecting a radio link failure with at least one of the second remote UEs.

19. The apparatus according to claim 13, wherein the notification message is transmitted via a PC5-RRC message.

20. A communication system, **characterized in that** the communication system comprises:
a first remote UE comprising an information receiving apparatus according to any one of claims 1 to 12;
a relay UE comprising an information transmitting apparatus according to any one of claims 13 to 19; and
at least one second remote UE configured to communicate with the first remote UE via the relay UE.
